# EUROPÄISCHE PATENTSCHRIFT

(11) **EP 1 413 495 B1**
(45) Veröffentlichungstag und Bekanntmachung des Hinweises auf die Patenterteilung: **26.12.2007**
(21) Anmeldenummer: 02023449.8
(22) Anmeldetag: 21.10.2002
(51) Int. Cl.: B61L 3/22, H01Q 13/20, H04B 5/00, H01Q 1/32

(54) **Streckenseitige Antennenanordnung für ein Zugbeeinflussungssystem**
Trackside antenna arrangement for a train control system
Dispositif d'antenne à coté de la voie pour un système de commande pour trains

(43) Veröffentlichungstag der Anmeldung: 28.04.2004
(73) Patentinhaber: Siemens Schweiz AG, 8047 Zürich (CH)
(72) Erfinder: Giugni, Andrea Pietro, 8105 Regensdorf (CH); Zehnder, Beat, 8307 Effretikon (CH)
(74) Vertreter: Fischer, Michael

(56) Entgegenhaltungen:
- EP-A- 0 743 698
- DE-A- 2 305 899
- DE-A- 3 838 585
- PATENT ABSTRACTS OF JAPAN vol. 1996, no. 12, 26. Dezember 1996 (1996-12-26) & JP 08 204620 A (MATSUSHITA ELECTRIC WORKS LTD), 9. August 1996 (1996-08-09)

## Beschreibung

Die vorliegende Erfindung betrifft eine streckenseitige Antennenanordnung für ein Zugbeeinflussungssystem nach dem Oberbegriff des Patentanspruchs 1.

Die vorliegende Erfindung befasst sich mit dem Gebiet der kontinuierlichen Übertragung von sicherheitsrelevanter Information zwischen einem Geleise und mindestens einem schienengebunden Fahrzeug oder einem ähnlichen geführten Verkehrsmittel. Ein solches Übertragungssystem ist bezüglich der grundsätzlichen Funktionalität beispielsweise der Firmenschrift "SIEMENS Euroloop S21 damit die Information beim Punkt nicht endet" [1] zu entnehmen.

Längs der Geleise ist als Antenne ein sogenanntes Leckkabel angeordnet. Anstelle des Begriffes "Leckkabel" ist auch der Begriff "Strahlungskabel" geläufig. Dieses Leckkabel ist als Koaxialkabel ausgebildet, bei dem der äussere Leiter in einer Ausführungsform in einer Wellenform (gerippte Zylinderform) ausgebildet ist. Dabei weisen die Wellen des Aussenleiters Öffnungen - auch Leckstellen genannt - auf und ermöglichen damit einen "Austritt" eines elektromagnetischen Feldes. Die Art der Anordnung am Schienenfuss und die Speisung eines solchen Leckkabels ist in der Schrift EP 0 743 698 A1 [2] (Siemens Schweiz AG) offenbart.

In der praktischen Erprobung zeigte sich, dass es bei dem vorgeschlagenen System mit dem Koaxialkabel längs einer Schiene in Abhängigkeit des Weges wegen auftretender Unstetigkeitsstellen zu einer sprunghaften lokalen Erhöhung der abgestrahlten Feldstärke von bis zu 20 dBm kommen kann. Diese Unstetigkeitsstellen werden durch isolierende Schienenstösse oder Abschnitte längs von Weichen oder Kreuzungen mit ihren besonderen konstruktiven Ausprägungen der Schienen verursacht. Schienenstösse sind mit einer Isolierung versehen. Damit können Schienenabschnitte gebildet werden, so dass z. B. mit einem Gleisstromkreis eine Belegung des betreffenden Abschnittes durch ein Fahrzeug feststellbar ist. Ein Modell berücksichtigte die Schieneneinwirkung als Teil der Rückleitung des Stromes über den Aussenleiter nicht; deshalb war diese lokale Erhöhung bei Verwendung eines Koaxialkabels nicht erkennbar.

Die tatsächlich auftretende Erhöhung kann dazu führen, dass die ausgesandten Signale von einem Empfänger am Fahrzeug nicht als Signal des Leckkabels (kurz auch Loop-Signal genannt) gewertet, sondern als Signal (kurz als Balisen-Signal) des punktförmigen Balisen-Übertragungssystems interpretiert werden. Der Grund für diese Pegelerhöhung liegt darin, dass nicht das Leckkabel alleine, welches sich als Koaxialkabel mit Innen- und Aussenleiter nicht symmetrisch zur Umgebung verhält, sondern auch die eine oder beiden Schienen eines Geleises in elektrischer Weise für die Stromleitung arbeiten und damit ebenfalls Teil des Antennensystem bilden. So erfolgt die Rückleitung des Stromes nicht alleine über das Koaxialkabel, sondern gleichzeitig über die eine Schiene oder auch über die andere oder beide Schienen. Bei den vorgenannten Unstetigkeitsstellen zeigte sich nun, dass der "Rückstrom" über andere geometrische Wege, z.B. über die Schwelle oder über Z-Verbinder zur anderen Schiene oder über eine Erdleitung, fliesst und dadurch eine zu den "normalen" Bereichen grosse Fläche in Form einer Spulenwindung "aufspannt", so dass ein (elektro-)magnetisches Feld erzeugt wird, dessen Pegel in einem engen lokalen Bereich wesentlich grösser ist als längs einer stetigen Schiene. Das Phänomen dieser Pegelerhöhung könnte an den Unstetigkeitsstellen mit der Einfügung von Drosseln oder eines Übertragers durch eine Abschnittsbildung gelöst werden. Eine solche Lösung ist jedoch kompliziert, aufwendig und von den Bahnverwaltungen nicht akzeptiert.

Der vorliegenden Erfindung liegt daher die Aufgabe zugrunde, eine streckenseitige Antennenanordnung für ein Zugbeeinflussungssystem anzugeben, bei dem das abgestrahlte Feld weitgehend von den geometrischen und elektrisch leitenden Eigenschaften der Schiene resp. des Gleises immun resp. entkoppelt ist und ohne besondere Aufwendung montiert werden kann.

Diese Aufgabe wird durch die im Patentanspruch 1 angegebenen Merkmale gelöst.

Durch die erfindungswesentlichen Merkmale, wonach das Kabel symmetrisch aufgebaut ist und wenigstens zwei erste verdrillte Leiter aufweist, die als Hin- und Rückleiter fungieren;
ist eine Antennenanordnung geschaffen, bei der das Kabel alleine und nicht zusätzlich die umgebende Schiene die Antennenanordnung in Sende- und Empfangsrichtung bildet. Durch die Verwendung eines Kabels mit verdrillten oder verseilten Leitern ist die erfindungsgemässe Antennenanordnung leicht montierbar und erlaubt insbesondere eine flexible Montage wie z.B. der Wechsel von einer auf die andere Seite des Gleises (von einer Schiene zu anderen Schiene). Darüber hinaus ist durch die Verwendung eines lediglich verdrillten oder z.B. in einem Vierer-verseilten Leiterpaars eine erhebliche Kostenersparnis verbunden, da ein Koaxialkabel mit äquidistant angeordneten Lecks einen wesentlichen Kostenfaktor darstellt.

Vorteilhafte Ausgestaltungen der Erfindung sind in weiteren Ansprüchen angegeben.

Dadurch dass
die ersten zwei verdrillten Leiter und die weiteren zwei verdrillten Leiter in einer Parallelschaltung angeschlossen sind;
kann eine besonders symmetrische Erzeugung des Magnetwechselfeldes erreicht werden (Patentanspruch 4).

Dadurch dass
das längs des Geleises geführte Kabel eine Lage innerhalb oder ausserhalb des Geleises aufweist;
kann die Antennenanordnung nahezu beliebig an die jeweiligen örtlichen oder gleisbautechnischen Gegebenheiten angepasst werden (Patentanspruch 8).

Die Erfindung wird nachfolgend anhand der Zeichnung beispielsweise näher erläutert. Dabei zeigen:
- Figur 1: Querschnitt einer Ausführungsform der prinzipiellen Anordnung von Schiene, Kabel und Fahrzeug;
- Figur 2a, 2b, 2c: Querschnitt eines Kabels mit der Angabe möglicher Leiterbelegungen und Beschaltungen;
- Figur 3: Schnittdarstellung durch den Gleiskörper und die Bereiche der möglichen Lagen des Kabels;
- Figur 4: Lagewechsel der Antenne im Gleis;
- Figur 5: Kabelquerschnittsabfolge in Richtung des Verlaufs bei der Verseilung.

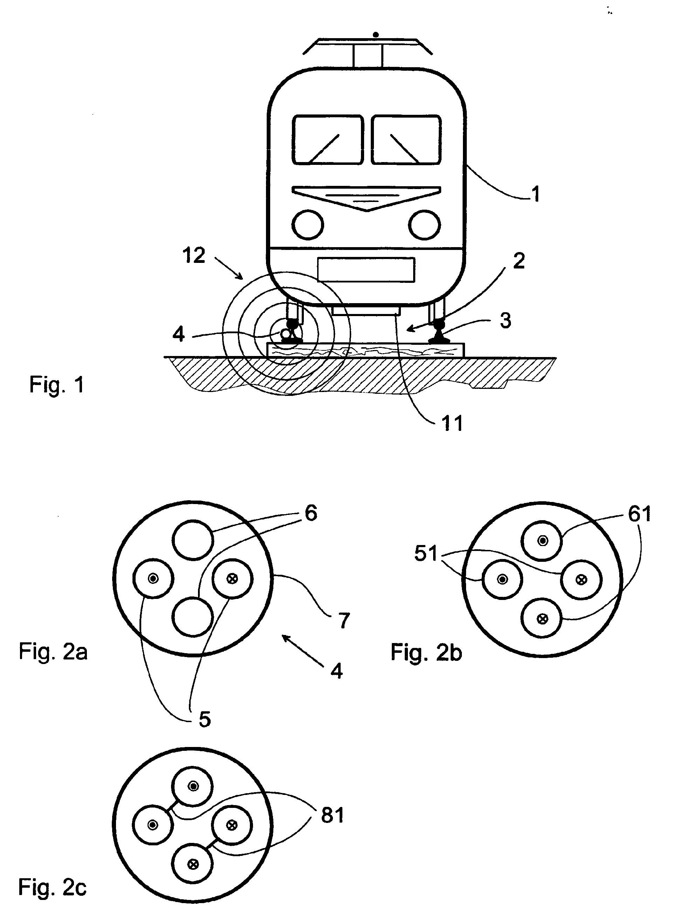

Fig. 1 zeigt ein auf einem Geleise 2 geführtes Triebfahrzeug 1, das mit einer Kommunikationseinheit 11 versehen ist. Am bezüglich des Geleises 2 äusseren Schienenfuss einer Schiene 3 ist ein Kabel 4 angebracht. Dieses Kabel 4 in der nachfolgend beschriebenen Ausgestaltung bildet die erfindungsgemässe Antennenanordnung, die zur Übertragung von Daten zwischen der auf einem Schienenfahrzeug montierten Kommunikationseinheit 11 und einer erdgebundenen Kommunikationseinheit LEU dient, die Einheit LEU ist in den Figuren nicht dargestellt. Die übertragenen Daten beinhalten Zugbeeinflussungsinformationen wie z.B. eine maximal zulässige Geschwindigkeit, den Fahrbegriff für einen nächsten Block- bzw. Sicherungsabschnitt. Mit den Feldlinien 12 ist das in diesem Zeitpunkt vom Kabel ausgesendete Magnetwechselfeld idealisiert, d.h. ohne Berücksichtigung von Einflüssen wie Schiene und Fahrzeug dargestellt. Die Übertragung erfolgt vorzugsweise mit dem DSSS-Verfahren im Frequenzbereich 2 -6 MHz. Bei der Informationsauswertung auf dem Fahrzeug wird auch nach der Höhe des empfangenen Pegels des Magnetwechselfeldes eine Prozessentscheidung getroffen. Ebenfalls nicht dargestellt ist die Signalrichtung von der Kommunikationseinheit 11 zum Kabel 4. Der Anschluss des Kabels 4 über ein "Loop Modem" an eine "Lineside Electronic Unit" LEU erfolgt wie offenbart gemäss dem Stand der Technik wie z.B. in [1] oder in EP 0 743 698 A1.

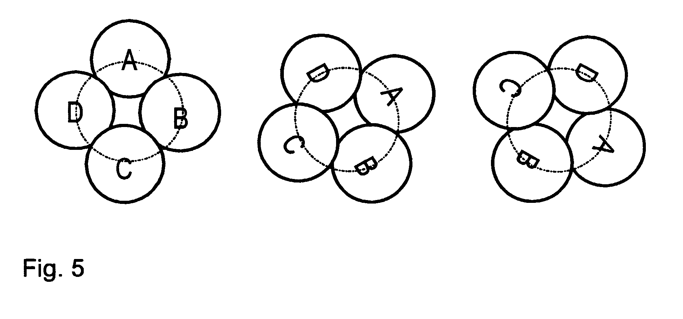

Anstelle des aus dem Stand der Technik bekannten Koaxialkabel mit den vorstehend beschriebenen Problemen weist das Kabel 4 wenigstens zwei verdrillte Leiter 5 auf. In der Figur 2a ist die Hin- und Rückleitung in dieser Reihenfolge mit dem Zeichen • bzw. dem Zeichen **X** dargestellt. Zum Schutz der wenigstens zwei Leiter 5 und zur Erhaltung der Symmetrie ist ein Mantel 7 vorgesehen. Die Verdrillungsparameter sind beispielsweise: 5 Schläge (=Windungen) pro Meter. Besonders vorteilhaft ist die Verwendung einer verseilten Anordnung mit vier Leitern, siehe dazu die Ausführungen weiter unten zur Figur 5. Der Aufbau gemäss der Figur 2a ergibt eine gute Symmetrie zwischen zwei Leiterpaaren deren zwei Leiter immer gegenüber liegen. Durch einen entsprechenden Isolationsaufbau wird eine kleine Dämpfung erreicht. Ein solcher Aufbau wird in Stellwerkkabeln verwendet, das mehrere sogenannte Viererverseilungen aufweisen kann. Das Stellwerkkabel weist überraschenderweise besonders gute Übertragungseigenschaften im vorgesehenen Frequenzbereich aufweist. Darüber hinaus beeinträchtigten die im Stellwerkkabel enthaltene metallische Dampfsperre und der Nagerschutz die Funktion als Antenne nicht. Das Stellwerkkabel ist ursprünglich für den Anschluss von Gleiskomponenten ab Stellwerk und ab Kabelendverteiler vorgesehen. Das weitere verseilte Leiterpaar 6 ist an dessen Ende elektrisch offen. Nicht verwendete und damit isolierte Leiter treten magnetisch gesehen nicht in Erscheinung und sind primär über die kapazitiven Spannungsteiler definiert.

Anstelle des vorgenannten Stellwerkkabels des Typs 10x4x .. mit einer KCCT-Armierung (gemäss Spezifikation der Schweizerischen Bundesbahnen SBB) kann auch ein Standardkabel für Kommunikationsanlagen verwendet werden, dass die erforderliche Widerstandsfähigkeit gegen Umwelteinwirkungen aufweist, z.B. einen Nagerschutz.

Weitere Ausführungsformen der vorliegenden Erfindung bezüglich der Beschaltung der weiteren zwei verdrillten Leiter 6 des Kabels 4 zeigen die Figuren 2b und 2c. In Figur 2b ist für die ersten zwei verdrillten Leitern eine Beaufschlagung 51 mit einem Signal Loop 1 und eine Beaufschlagung 61 mit einem Signal Loop 2 vorgesehen. Bei der Antennenanordnung gemäss der Figur 2c ist für die ersten zwei Leiter 5 und die weiteren zwei Leiter 6 eine Parallelschaltung 81 vorgesehen. Zum vorgenannten Abschluss des Kabels 4: Der elektrische Abschluss kann entweder als "Kurzschluss" oder mit einen Abschlusswiderstand ausgebildet sein. Der Abschlusswiderstand ist auf die Impedanz des Kabels angepasst und liegt in der Grössenordnung der Leitungsimpedanz. Der Impedanzwert für ein solches Kabel liegt bei etwa 90 bis 120 Ohm. Wird für die Antennenanordnung die Beschaltung des Kabels gemäss Fig 2c angewendet, so kann ein gebräuchlicher 50 Ohm Widerstand verwendet werden. Dieser kann damit von Systemen mit 50 Ohm Leckkabel unverändert übernommen werden. Somit kann diese Ausführungsform auch ohne Anpassungen an erdgebundenen Kommunikationseinheit LEU angeschlossen werden, welche für das Koaxial-Leckkabel konzipiert sind.

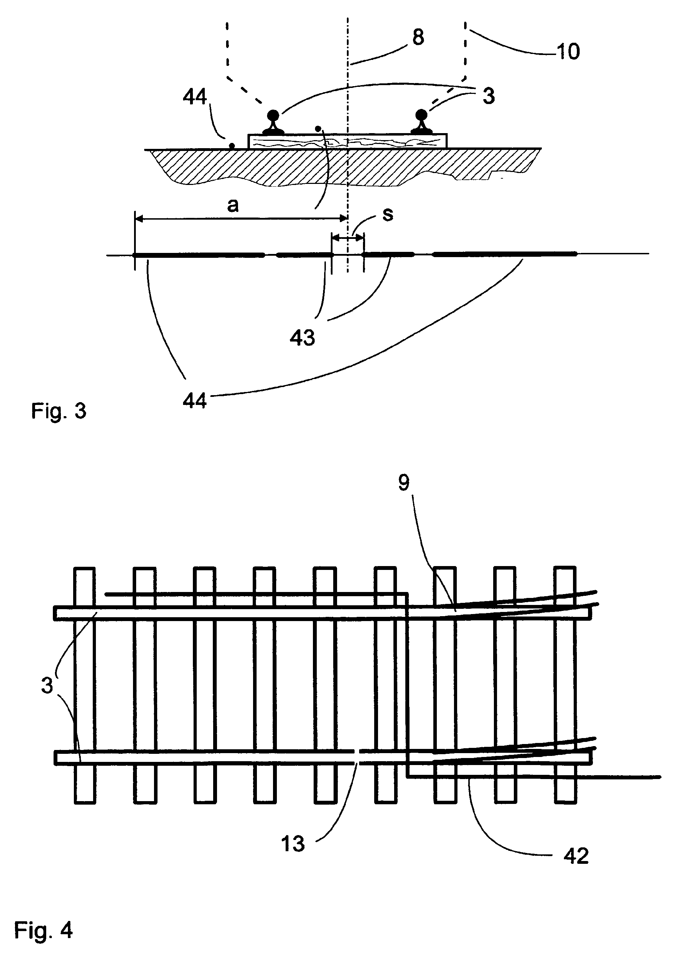

In Figur 3 sind alternativ zur Figur 1 weitere mögliche Lagebereiche der erfindungsgemässen Antennenanordnung am Geleise relativ zum Lichtraumprofil 10 dargestellt. Mit dem Bezugszeichen 44 ist ein Lagebereich ausserhalb der Schienen 3 dargestellt. Für die in Figur 3 dargestellte Weite a ist 3 m ein typischer Wert. Ein noch grösserer Wert für die Weite a ist insbesondere bei Doppel- oder Mehrspurstrecken zu den anderen Gleisen hin zu vermeiden, da dadurch Pegelüberdeckungen eines im Nachbargeleise fahrenden Zuges auftreten können. Dieses Übersprechen kann jedoch aufgrund des ETCS-Verfahrens mit Hilfe eines Sicherungsprotokollelementes nicht zu einer Übermittlung einer nicht zur Fahrstrasse gehörenden Sicherungsinformation an oder vom Fahrzeug 1 führen. Im Bereich zwischen den Schienen 3 ist in der Gleismitte 8 bzw. Gleisachse 8 (vgl. strichlinierte Linie) ein Bereich der Weite s auszunehmen. Wegen der symmetrischen Eigenschaften der Antenne sind grundsätzlich alle Lagen zwischen den Schienen 3 möglich, ausgenommen im Mittenbereich eine Ausdehnung von etwa 0.3m, da hier in der darüber liegenden Fahrzeug-Rahmenantenne der Durchtritt der Magnetfelder gegen Null geht. Ein typischer Wert für die Weite s liegt bei etwa 0.3 m .

In der Figur 4 ist ein Gleisabschnitt dargestellt, der eine Weiche 9 sowie einen Schienenstoss 13 aufweist. Die mit einem verdrillten Kabel gebildete erfindungsgemässe Antennenanordnung erlaubt nun, das Kabel aufgrund der jeweiligen örtlichen oder übertragungstechnischen Bedingungen auf einfache Weise von der einen Schienenseite auf die andere Schienenseite zu führen. Damit ist die Symmetrie der Antennenanordnung auch in diesem Bereich gegeben und bei einer Querung des Bereiches der Schienenmitte mit 90° zum Gleis entsteht dort keine Feldaufhebung. Der Verlauf des Kabels ist in der Figur 4 mit dem Bezugszeichen 42 dargestellt.

Die vorgenannten Eigenschaften für eine sendende Antennenanordnung treffen auch für die umgekehrte Richtung zu, das heisst, wenn die erfindungsgemässe Antennenanordnung von der Kommunikationseinheit 11 eines Triebfahrzeuges 1 ein magnetisches Wechselfeld empfängt.

In Figur 5 ist die Querschnittsabfolge der von vier Leitern A, B, C und D dargestellt. Diese Querschnittsabfolge entsteht bei einer Verseilung der vier Leiter.

Es sind zur erfindungsgemässen Antennenanordnung noch weitere Ausführungsformen bezüglich der Anordnung längs der Schiene 3 möglich, wie z.B. die Verlegung im inneren oder äusseren Schienenfuss einer Schiene 3 eines Geleises 2. Die Ausgestaltung der Antennenanordnung erlaubt aufgrund der vorgegebenen Platzverhältnisse eine nahezu beliebige Verlegung, da ein Kabel 4 mit verdrillten oder verseilten Leitern 4, 6 im Gegensatz zu einem Koaxialkabel mit sehr kleinen Radien gebogen werden kann. Für die Antennenanordnung kann anstelle der Verlegung auf dem Schienenfuss eine besondere Ausnehmung in oder an der Schiene 3 vorgesehen werden, z.B. für Geleise 2 von Strassenbahnen.

### Liste der verwendeten Bezugszeichen und Abkürzungen

- 1: Schienenfahrzeug, Triebfahrzeug
- 2: Geleise
- 3: Schiene
- 4: Kabel
- 5: erste zwei verdrillte Leiter, erstes Leiterpaar
- 6: weitere zwei verdrillte Leiter, zweites Leiterpaar
- 7: Mantel
- 8: Gleisachse
- 9: Weiche
- 10: Lichtraumprofil eines Eisenbahnfahrzeuges
- 11: auf einem Schienenfahrzeug montierten Kommunikationseinheit
- 12: Magnetische Feldlinien, H-Feld
- 13: Schienenstoss
- 42: gekreuzte Verlegungsform des Kabels
- 43: Positionsbereiche der erfindungsgemässen Antennenordnung zwischen den Schienen
- 44: Positionsbereiche der erfindungsgemässen Antennenordnung ausserhalb der Schienen
- 51: Beaufschlagung der ersten zwei verdrillten Leiter mit einem Signal Loop 1
- 61: Beaufschlagung der weiteren zwei verdrillten Leiter mit einem Signal Loop 2
- 81: Parallelschaltung der ersten und weiteren zwei verdrillten Leitern
- A, B, C, D: Leiter eines Vierer-Kabels
- DSSS: Direct Sequence Spread Spectrum
- LEU: Lineside Electronic Unit
- a, s: Weite von Lagen zur Verlegung der Antennenanordnung im Gleisbereich

### Liste der zitierten Schriften

- [1]: "SIEMENS Euroloop S21 damit die Information beim Punkt nicht endet"
Bestellnummer A19100-V010-B047
HTS 9040/100
Herausgeber Siemens Schweiz AG, CH - 8304 Wallisellen
- [2]: EP 0 743 698 A1
Übertragungsvorrichtung für verkehrstechnische Kommunikationssysteme (Siemens Schweiz AG)

## Patentansprüche

1. Streckenseitige Antennenanordnung für ein Zügbeeinflussungssystem zur Übertragung von Daten zwischen einer auf einem Schienenfahrzeug (1) montierten Kommunikationseinheit (11) und einer erdgebundenen Kommunikationseinheit, wobei die erdgebundene Kommunikationseinheit zur Aussendung und/oder zum Empfang von Signalen mit einem längs zu einem Geleise (2) geführten Kabel (4) verbunden ist,
**dadurch gekennzeichnet dass**
das Kabel (4) symmetrisch aufgebaut ist und wenigstens zwei erste verdrillte Leiter (5) aufweist, die als Hin- und Rückleiter fungieren.

2. Antennenanordnung nach Anspruch 1,
**dadurch gekennzeichnet, dass**
das Kabel (5) zwei weitere verdrillte Leiter (6) aufweist.

3. Antennenanordnung nach Anspruch 2,
**dadurch gekennzeichnet, dass**
dass die weiteren verdrillten Leiter (6) von der Kommunikationseinheit galvanisch getrennt sind.

4. Antennenanordnung nach Anspruch 2,
**dadurch gekennzeichnet, dass**
dass die ersten zwei verdrillten Leiter und die weiteren zwei verdrillten Leiter (6) in einer Parallelschaltung (81) angeschlossen sind.

5. Antennenanordnung nach Anspruch 2 oder 4,
**dadurch gekennzeichnet, dass**
die ersten zwei Leiter (5) am Ende des Kabels (4) mit einem Abschlusswiderstand in der Grössenordnung der Leitungsimpedanz verbunden sind oder am Ende des Kabels (4) kurzgeschlossen sind.

6. Antennenanordnung nach einem Ansprüche 2 bis 5,
**dadurch gekennzeichnet, dass**
dass Kabel (4) mit den ersten zwei verdrillten Leitern (5) und den weiteren zwei verdrillten Leiter (6) eine Viererverseilung (A, B, C, D) aufweist.

7. Antennenanordnung nach Anspruch 6,
**dadurch gekennzeichnet, dass**
das Kabel (4) mehrere Viererverseilungen aufweist.

8. Antennenanordnung nach einem Ansprüche 1 bis 7,
**dadurch gekennzeichnet, dass**
das längs des Geleises (2) geführte Kabel (4) eine Lage innerhalb (43) oder ausserhalb (44) des Geleises aufweist.

9. Antennenanordnung nach einem Ansprüche 1 bis 7,
**dadurch gekennzeichnet, dass**
das längs des Geleises (2) geführte Kabel (4) auf dem Schienenfuss einer Schiene (3) oder in einer Ausnehmung der Schiene (3) angeordnet ist.

10. Antennenanordnung nach einem Ansprüche 2 bis 9,
**dadurch gekennzeichnet, dass**
als Kabel (4) ein Stellwerkkabel vorgesehen ist.

## Claims

1. Trackside antenna arrangement for a train control system for transmitting data between a communication unit (11) mounted on a railway vehicle (1) and a communication unit on the ground, with the ground communication unit being connected to a cable (4) fed along a track (2) in order to transmit and/or receive signals,
**characterised in that**
the cable (4) is of a symmetrical structure and comprises at least two first twisted conductors (5), which function as forward and return conductors.

2. Antenna arrangement according to claim 1,
**characterised in that**
the cable (5) comprises two further twisted conductors (6).

3. Antenna arrangement according to claim 2,
**characterised in that**
the further twisted conductors (6) are electrically isolated from the communication unit.

4. Antenna arrangement according to claim 2,
**characterised in that**
the first two twisted conductors and the further two twisted conductors (6) are connected in a parallel circuit (81).

5. Antenna arrangement according to claim 2 or 4,
**characterised in that**
the first two conductors (5) on the end of the cable (4) are connected to a load resistor in the order of magnitude of the line impedance or are short-circuited on the end of the cable (4).

6. Antenna arrangement according to one of claims 2 to 5,
**characterised in that**
cable (4) with the first two twisted conductors (5) and the further two twisted conductors (6) has a twisted quad configuration (A, B, C, D).

7. Antenna arrangement according to claim 6,
**characterised in that**
the cable (4) comprises a number of twisted quads.

8. Antenna arrangement according to one of claims 1 to 7,
**characterised in that**
the cable (4) fed along the track (2) features a position inside (43) or outside (44) the track.

9. Antenna arrangement according to one of claims 1 to 7,
**characterised in that**
the cable (4) fed along the track (2) is arranged on the base of the rail of a track (3) or in a recess of the rail (3).

10. Antenna arrangement according to one of claims 2 to 9, **characterised in that** a railway signal cable is provided as a cable (4).

## Revendications

1. Dispositif d'antenne côté voie pour un système d'arrêt automatique des trains en vue de transmettre des données entre une unité (11) de communication montée sur un véhicule (1) ferroviaire et une unité de communication terrestre, l'unité de communication terrestre étant pour l'émission et/ou la réception de signaux reliée à un câble (4) passant le long d'une voie ferrée (2),
**caractérisé en ce que** le câble (4) est symétrique et a au moins deux premiers conducteurs (5) torsadés qui servent de conducteur aller et de conducteur retour.

2. Dispositif d'antenne suivant la revendication 1,
**caractérisé en ce que**
le câble (5) a deux autres conducteurs (6) torsadés.

3. Dispositif d'antenne suivant la revendication 2,
**caractérisé en ce que**
les autres conducteurs (6) torsadés sont séparés galvaniquement de l'unité de communication.

4. Dispositif d'antenne suivant la revendication 2,
**caractérisé en ce que**
les deux premiers conducteurs torsadés et les deux autres conducteurs (6) torsadés sont raccordés suivant un circuit (81) en parallèle.

5. Dispositif d'antenne suivant la revendication 2 ou 4,
**caractérisé en ce que**
les deux premiers conducteurs (5) sont reliés à l'extrémité
du câble (4) par une résistance de terminaison de l'ordre de grandeur de l'impédance de la ligne ou sont court-circuités à l'extrémité du câble (4).

6. Dispositif d'antenne suivant l'une des revendications 2 à 5,
**caractérisé en ce que**
le câble (4) ayant les deux premiers conducteurs (5)
torsadés et les deux autres conducteurs (6) torsadés a un câblage (A, B, C, D) en quarte.

7. Dispositif d'antenne suivant la revendication 6,
**caractérisé en ce que**
le câble (4) a plusieurs câblages en quarte.

8. Dispositif d'antenne suivant l'une des revendications 1 à 7,
**caractérisé en ce que**
le câble (4) passant le long de la voie ferrée (2) a une
position à l'intérieur (43) ou à l'extérieur (44) de la voie ferrée.

9. Dispositif d'antenne suivant l'une des revendications 1 à 7,
**caractérisé en ce que**
le câble (4) passant le long de la voie ferrée (2) est
disposé sur le patin d'un rail (3) ou dans un évidement du rail (3).

10. Dispositif d'antenne suivant l'une des revendications 2 à 9,
**caractérisé en ce que**
il est prévu comme câble (4) un câble de poste d'aiguillage.
